# EUROPEAN PATENT APPLICATION

(11) **EP 4 597 897 A1**
(43) Date of publication of application: **06.08.2025**
(21) Application number: 23870398.7
(22) Date of filing: 15.09.2023
(51) Int. Cl.: H04L 5/00

(54) **COHERENT JOINT TRANSMISSION METHOD AND APPARATUS**

(30) Priority: 30.09.2022 CN 202211216166
(71) Applicant: Datang Mobile Communications Equipment Co., Ltd., Beijing 100085 (CN)
(72) Inventor: LI, Hui, Beijing 100085 (CN); GAO, Qiubin, Beijing 100085 (CN); SU, Xin, Beijing 100085 (CN); LUO, Yajuan, Beijing 100085 (CN)
(74) Representative: Studio Torta S.p.A.
(86) International application number: PCT/CN2023/119122
(87) International publication number: WO 2024/067164

(57) **Abstract**

Provided in the embodiments of the present disclosure are a coherent joint transmission method and an apparatus, belonging to the technical field of communications. The method comprises: receiving media access control element (MAC-CE) signaling or first downlink control information (DCI) signaling sent by a network device, the MAC-CE signaling or the first DCI signaling being used for indicating target transmission configuration indication (TCI) state information; and, on the basis of the target TCI state information, performing coherent joint transmission of data, wherein the target TCI state information comprises N target TCI states, each target TCI state is any one of downlink TCI states or uplink and downlink joint TCI states, and N is a positive integer greater than 1.

## Description

### CROSS-REFERENCES TO RELATED APPLICATIONS

The present application claims priority to Chinese Patent Application No. 202211216166.8, filed on September 30, 2022, entitled "Coherent Joint Transmission Method and Apparatus", which is hereby incorporated by reference in its entirety.

### FIELD

The present application relates to the field of communication, and in particular, to methods and apparatuses for coherent joint transmission.

### BACKGROUND

A multi-transmission/reception point (multi-TRP) transmission technology is an important technical means to improve cell edge coverage and provide a more balanced quality of service in a service area. A traditional 5G new radio (NR) system supports a coordinated multi-point physical downlink shared channel (PDSCH) transmission technology.

In case that transmission channel characteristics of multiple transmission/reception points (TRPs) are similar, multiple TRPs may be used for coherent joint transmission, that is, the same data stream may be transmitted from multiple TRPs simultaneously. However, a traditional communication system does not support coherent joint transmission in a multi-TRP scenario.

### BRIEF SUMMARY

Embodiments of the present application provide methods and apparatuses for coherent joint transmission, to solve a defect that coherent joint transmission in a multi-TRP scenario is not supported in the related art, and to realize coherent joint transmission of data in the multi-TRP scenario, thereby improving data transmission performance of a communication system.

An embodiment of the present application provides a method for coherent joint transmission, performed by a terminal, including:
receiving a media access control-control element (MAC-CE) signaling or a first downlink control information (DCI) signaling sent from a network device, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the method further includes: receiving a second DCI signaling sent from the network device,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the method further includes:
determining that quasi co-location (QCL) types for two target TCI states are different.

In an embodiment, in case that N is 2, before performing the coherent joint transmission of data based on the target TCI state information, the method further includes:
receiving a higher layer signaling sent from the network device, where the higher layer signaling is used to indicate to perform the coherent joint transmission of data based on the target TCI state information.

In an embodiment, in case that N is greater than 2, performing the coherent joint transmission of data based on the target TCI state information includes at least one of the following:
performing the coherent joint transmission of data based on N target TCI states included in the target TCI state information, and transmitting a target channel and a reference signal based on M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the method further includes:
receiving a second DCI signaling sent from the network device, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

An embodiment of the present application further provides a method for coherent joint transmission, performed by a network device, including:
sending a media access control-control element (MAC-CE) signaling or a first downlink control information (DCI) signaling to a terminal, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the method further includes: sending a second DCI signaling to the terminal,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the method further includes:
determining that quasi co-location (QCL) types for two target TCI states are different.

In an embodiment, in case that N is 2, before performing the coherent joint transmission of data based on the target TCI state information, the method further includes:
indicating the terminal to perform the coherent joint transmission of data based on the target TCI state information through a higher layer signaling.

In an embodiment, in case that N is greater than 2, performing the coherent joint transmission of data based on the target TCI state information includes at least one of the following:
performing the coherent joint transmission of data based on N target TCI states included in the target TCI state information, and transmitting a target channel and a reference signal using M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the method further includes:
sending a second DCI signaling to the terminal, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

An embodiment of the present application further provides a terminal, including a memory, a transceiver and a processor,
where the memory is used for storing a computer program; the transceiver is used for receiving and sending data under control of the processor; and the processor is used for reading the computer program in the memory and performing the following operations:
receiving a media access control-control element (MAC-CE) signaling or a first downlink control information (DCI) signaling sent from a network device, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the processor is further used for: receiving a second DCI signaling sent from the network device,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the processor is further used for:
determining that quasi co-location (QCL) types for two target TCI states are different.

In an embodiment, in case that N is 2, before performing the coherent joint transmission of data based on the target TCI state information, the processor is further used for:
receiving a higher layer signaling sent from the network device, where the higher layer signaling is used to indicate to perform the coherent joint transmission of data based on the target TCI state information.

In an embodiment, in case that N is greater than 2, performing the coherent joint transmission of data based on the target TCI state information includes at least one of the following:
performing the coherent joint transmission of data based on N target TCI states included in the target TCI state information, and transmitting a target channel and a reference signal based on M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the processor is further used for:
receiving a second DCI signaling sent from the network device, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

An embodiment of the present application provides a network device, including a memory, a transceiver and a processor,
where the memory is used for storing a computer program; the transceiver is used for receiving and sending data under control of the processor; and the processor is used for reading the computer program in the memory and performing the following operations:
sending a media access control-control element (MAC-CE) signaling or a first downlink control information (DCI) signaling to a terminal, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the processor is further used for: sending a second DCI signaling to the terminal,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the processor is further used for:
determining that quasi co-location (QCL) types for two target TCI states are different.

In an embodiment, in case that N is 2, before performing the coherent joint transmission of data based on the target TCI state information, the processor is further used for:
indicating the terminal to perform the coherent joint transmission of data based on the target TCI state information through a higher layer signaling.

In an embodiment, in case that N is greater than 2, performing the coherent joint transmission of data based on the target TCI state information includes at least one of the following:
performing the coherent joint transmission of data based on N target TCI states included in the target TCI state information, and transmitting a target channel and a reference signal using M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the processor is further used for:
sending a second DCI signaling to the terminal, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

An embodiment of the present application provides an apparatus for coherent joint transmission, for use in a terminal, including:
a receiving module, used for receiving a media access control-control element (MAC-CE) signaling or a first downlink control information (DCI) signaling sent from a network device, where the MAC-CE signaling or the first DCI signaling is used to indicate target transmission configuration indicator (TCI) state information; and
a transmitting module, used for performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the receiving module is further used for: receiving a second DCI signaling sent from the network device,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the transmitting module is further used for:
determining that quasi co-location (QCL) types for two target TCI states are different.

In an embodiment, in case that N is 2, before performing the coherent joint transmission of data based on the target TCI state information, the receiving module is further used for:
receiving a higher layer signaling sent from the network device, where the higher layer signaling is used to indicate to perform the coherent joint transmission of data based on the target TCI state information.

In an embodiment, in case that N is greater than 2, the transmitting module is used for performing at least one of the following:
performing the coherent joint transmission of data based on N target TCI states included in the target TCI state information, and transmitting a target channel and a reference signal based on M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the receiving module is further used for:
receiving a second DCI signaling sent from the network device, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

An embodiment of the present application provides an apparatus for coherent joint transmission, for use in a network device, including:
a sending module, used for sending a media access control-control element (MAC-CE) signaling or a first downlink control information (DCI) signaling to a terminal, where the MAC-CE signaling or the first DCI signaling is used to indicate target transmission configuration indicator (TCI) state information; and
a transmitting module, used for performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the sending module is further used for: sending a second DCI signaling to the terminal,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the transmitting module is further used for:
determining that quasi co-location (QCL) types for two target TCI states are different.

In an embodiment, in case that N is 2, before performing the coherent joint transmission of data based on the target TCI state information, the sending module is further used for:
indicating the terminal to perform the coherent joint transmission of data based on the target TCI state information through a higher layer signaling.

In an embodiment, in case that N is greater than 2, the transmitting module is used for performing at least one of the following:
performing the coherent joint transmission of data based on N target TCI states included in the target TCI state information, and transmitting a target channel and a reference signal using M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the sending module is further used for:
sending a second DCI signaling to the terminal, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

An embodiment of the present application further provides a processor-readable storage medium, where processor-readable storage medium stores a computer program, and the computer program is used to cause the processor to perform the methods described above.

In the methods and apparatuses for coherent joint transmission provided by the present application, the target TCI state information is indicated to the terminal through the MAC-CE signaling or the DCI signaling, and the terminal and the network device realize the coherent joint transmission of data in the multi-TRP scenario based on multiple target TCI states among the target TCI state information, thereby improving data transmission performance and the flexibility of a communication system.

### BRIEF DESCRIPTION OF THE DRAWINGS

To illustrate solutions in the embodiments of the present application or the related art more clearly, the drawings that need to be used in the descriptions of the embodiments or the related art will be briefly described below. The drawings in the following description are some embodiments of the present application, and other drawings may be obtained based on these drawings without any creative work for those skilled in the related art.
FIG. 1 is a first schematic flowchart of a method for coherent joint transmission according to an embodiment of the present application;
FIG. 2 is a second schematic flowchart of a method for coherent joint transmission according to an embodiment of the present application;
FIG. 3 is a schematic structural diagram of a terminal according to an embodiment of the present application;
FIG. 4 is a schematic structural diagram of a network device according to an embodiment of the present application;
FIG. 5 is a first schematic flowchart of an apparatus for coherent joint transmission according to an embodiment of the present application; and
FIG. 6 is a second schematic flowchart of an apparatus for coherent joint transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Embodiments of the present application provide methods and apparatuses for coherent joint transmission to perform the coherent joint transmission of data in a multi-transmission/reception point (multi-TRP) scenario.

The methods and the apparatuses are based on the same disclosed concept, the implementation of the apparatuses and the methods can be referred to each other since the principles of the methods and the apparatuses are similar, and the repetition will not be repeated.

In order to fully understand the solution of the present application, the following content is now introduced.

A traditional 5G new radio (NR) system supports a coordinated multi-point physical downlink shared channel (PDSCH) transmission technology, which includes the following schemes:
a space division multiplexing (SDM) transmission scheme for a PDSCH, in this scheme, two different data streams for the PDSCH are sent simultaneously from two TRPs, and occupy same time-frequency resources;
a frequency division multiplexing (FDM) transmission scheme for a PDSCH, in this scheme, the PDSCH is repeatedly transmitted in a frequency domain to further improve the performance of ultra-reliable low-latency communication (URLLC) transmission; and
a time division multiplexing (TDM) transmission scheme (including intra-slot TDM and inter-slot TDM) for a PDSCH, in this scheme, the PDSCH is repeatedly transmitted in a time domain to further improve the performance of URLLC transmission.

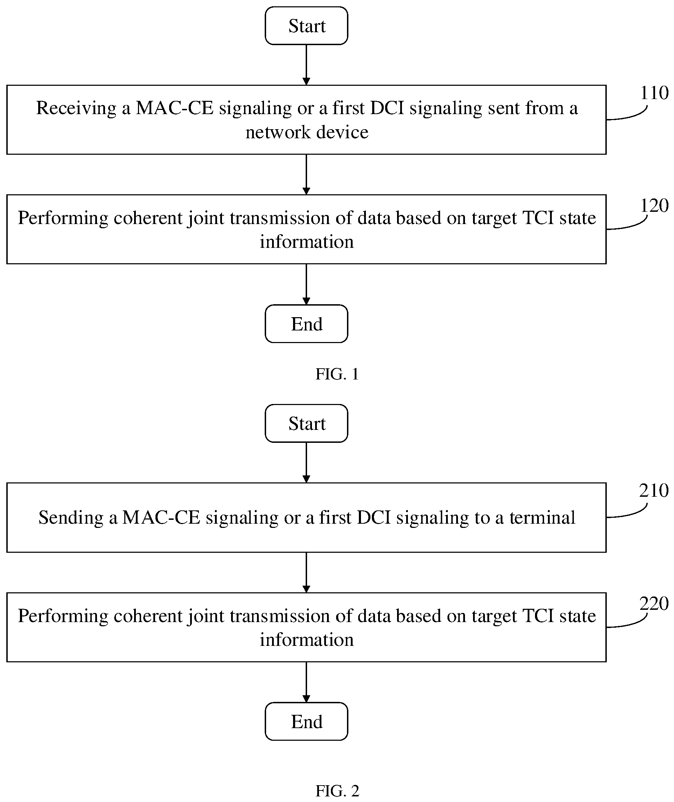

FIG. 1 is a first schematic flowchart of a method for coherent joint transmission according to an embodiment of the present application. As shown in FIG. 1, the embodiment of the present application provides a method for coherent joint transmission, which is performed by a terminal, such as a mobile phone. The method includes the following steps.

Step 110: receiving a media access control-control element (MAC-CE) signaling or a first downlink control information (DCI) signaling sent from a network device, where the MAC-CE signaling or the first DCI signaling is used to indicate target transmission configuration indicator (TCI) state information.

Step 120: performing coherent joint transmission of data based on the target TCI state information.

The target TCI state information includes N target TCI states, and the target TCI state is any one of a downlink TCI state or a joint uplink-downlink TCI state, where N is a positive integer greater than 1.

In the step 110, the terminal may receive the MAC-CE signaling sent from the network device, and the MAC-CE signaling may activate one or more groups of TCI state information. Table 1 is taken as an example of a group of TCI state information activated by the MAC-CE signaling. In Table 1, a group of TCI state information activated by MAC-CE signaling includes 8 pieces of TCI state information. Each code point corresponds to one piece of TCI state information, and each TCI state information corresponds to 1 or 2 (or more, table 1 is only for example) target TCI states. The target TCI state may be used for both downlink transmission and uplink transmission in case that the target TCI state is a joint uplink-downlink TCI state.

**Table 1: Example Table 1 of TCI state information activated by the MAC-CE signaling**

| Code point | TCI state information |
|---|---|
| P1 | {TCI_1}, {TCI_5} |
| P2 | {TCI_4}, {TCI_11} |
| P3 | {TCI_7}, {TCI_9} |
| P4 | {TCI_10}, {TCI_17} |
| P5 | {TCI_2} |
| P6 | {TCI_3} |
| P7 | {TCI_6} |
| P8 | {TCI_8} |

It should be noted that in order to ensure coherent joint transmission between the network device and the terminal, it is also necessary to determine the target TCI state information for performing the coherent joint transmission of data from the group of TCI state information activated by the MAC-CE signaling.

The terminal may still determine to take which TCI state information in the group of TCI state information as the target TCI state information by receiving the MAC-CE signaling sent from the network device. The MAC-CE signaling may be the same as the MAC-CE signaling that activates one or more groups of TCI state information, or it may be a dedicated MAC-CE signaling sent from the network device to the terminal.

In an embodiment, the terminal may also determine to take which TCI state information in the group of TCI state information as the target TCI state information by receiving the first DCI signaling sent from the network device.

For example, the first DCI signaling may select a code point from the activated TCI state information group based on the value of the TCI indication field for TCI state indication. For example, a value of the TCI indication field corresponds to code point P3, and the network device indicates the target TCI state information including two target TCI states TCI_7 and TCI_9 to the terminal.

It should be noted that in case that the target TCI state information indicated by the MAC-CE signaling or the first DCI signaling includes one target TCI state, such as target TCI state information including {TCI_2}, target TCI state information including {TCI_3}, etc., the terminal will directly perform coherent joint transmission of data based on a single target TCI state among the target TCI state information.

In case that the target TCI state information indicated by the MAC-CE signaling or the first DCI signaling includes two or more target TCI states, the network device will further indicate the terminal whether to perform the coherent joint transmission of data based on the target TCI state information, and/or perform the coherent joint transmission of data specifically based on which target TCI states in the target TCI state information. The network device and the terminal may also perform coherent joint transmission of data based on the target TCI state information in a predetermined way.

In step 120, after determining the target TCI state information, the terminal will perform the coherent joint transmission of data with the network device based on the target TCI state information. That is, the terminal will use multiple TRPs to simultaneously transmit the same data stream with the network device based on multiple target TCI states among the target TCI state information.

It should be noted that one target TCI state may correspond to one TRP. In case that multiple target TCI states are used to perform coherent joint transmission, the coherent joint transmission of data in a multi-TRP scenario may be achieved.

In the method for coherent joint transmission provided by the present application, the target TCI state information is indicated to the terminal through the MAC-CE signaling or the DCI signaling, and the terminal and the network device realize the coherent joint transmission of data in the multi-TRP scenario based on multiple target TCI states among the target TCI state information, thereby improving data transmission performance and the flexibility of a communication system.

In an embodiment, in case that N is 2, that is, in case that the target TCI state information includes two target TCI states, the network device needs to further indicate the terminal whether to perform the coherent joint transmission of data based on the target TCI state information, and/or perform the coherent joint transmission of data specifically based on which target TCI states in the target TCI state information. Therefore, before step 120, the method for coherent joint transmission provided by the embodiment of the present application may further include:
receiving the second DCI signaling sent from the network device, where the second DCI signaling is used to indicate the terminal to perform the coherent joint transmission of data in at least one of the following ways.

Way 1: the second DCI signaling includes a first information field, and the first information field is used to indicate to perform the coherent joint transmission of data based on the target TCI state information.

The second DCI signaling may include one first information field, and the first information field is used to explicitly indicate to perform the coherent joint transmission based on the target TCI state information.

For example, a value of the first information field may be used to indicate whether coherent joint transmission is adopted. The first information field may use a 1-bit width, in case that the value of the first information field is "0", it indicates that coherent joint transmission is not adopted, and in case that the value of the first information field is "1", it indicates that coherent joint transmission is adopted. Alternatively, in case that the value of the first information field is "1", it indicates that coherent joint transmission is not adopted, and in case that the value of the first information field is "0", it indicates that coherent joint transmission is adopted.

Way 2: the second DCI signaling includes a resource assignment field, a number of repetition of the target TCI state information in the resource assignment field is 1, and the number of repetition of the target TCI state information is used to indicate to perform the coherent joint transmission of data based on the target TCI state information.

For example, a time domain resource assignment (TDRA) field in the second DCI signaling may be used to indicate whether to perform the coherent joint transmission of data based on the target TCI state information. The time domain resource assignment field corresponds to a resource assignment parameter list, as shown in Table 2.

**Table 2: Resource assignment parameter list 1**

| Code point | Slot offset | Start symbol and length | PDSCH mapping type | Number of repetition |
|---|---|---|---|---|
| P1 | XXX | XXX | XXX | 1 |
| P2 | XXX | XXX | XXX | 2 |
| P3 | XXX | XXX | XXX | 8 |
| P4 | XXX | XXX | XXX | 4 |

Each row in Table 2 corresponds to a set of parameter values, including a slot offset, a start symbol and a length, a PDSCH mapping type and a number of repetition, etc. The resource assignment parameter list is configured by a higher layer parameter radio resource control (RRC) or predefined by the system. It should be noted that the "XXX" involved in the table of the present application indicates that values of relevant parameters have been given by the relevant standard protocol, and detailed introduction is not given in the embodiments of the present application.

A value of the number of repetition in the resource assignment parameter list may be specifically used to indicate whether to perform the coherent joint transmission of data based on the target TCI state information.

For example, in case that the number of repetition is configured to 1, it means that the target TCI state information corresponding to this row is used for coherent joint transmission. Table 2 is taken as an example. In case that the value of the time domain resource assignment field corresponds to code point P1, coherent joint transmission is performed based on the target TCI state information. In case that the value of the time domain resource assignment field corresponds to other code points, coherent joint transmission is not adopted.

In an embodiment, joint coherent transmission may only be performed in case that the number of repetition is configured to 2, 8, 4, etc. Embodiments of the present application do not specifically limit this.

Way 3: the second DCI signaling includes a resource assignment field, the resource assignment field includes a target parameter, and a value of the target parameter is used to indicate to perform the coherent joint transmission of data based on the target TCI state information.

A target parameter may be introduced in the resource assignment parameter list corresponding to the time domain resource assignment field, as shown in Table 3, and it indicates whether performing the coherent joint transmission of data based on the target TCI state information according to the value of the target parameter.

**Table 3: Resource assignment parameter list 2**

| Code point | Slot offset | Start symbol and length | PDSCH mapping type | Number of repetition | Target parameter |
|---|---|---|---|---|---|
| P1 | XXX | XXX | XXX | 1 | 0 |
| P2 | XXX | XXX | XXX | 2 | 1 |
| P3 | XXX | XXX | XXX | 8 | 1 |
| P4 | XXX | XXX | XXX | 4 | 0 |

A value of the target parameter being 0 indicates that coherent joint transmission is not adopted, and the value of the target parameter being 1 indicates that coherent joint transmission is adopted. For example, in case that the value of the time domain resource assignment field corresponds to code point P2 or code point P3, coherent joint transmission is adopted. In case that the value of the time domain resource assignment field corresponds to code point P1 or code point P4, coherent joint transmission is not adopted.

In an embodiment, the value of the target parameter being set to 1 may indicate that coherent joint transmission is not adopted, and being set to 0 may indicate that coherent joint transmission is adopted. Embodiments of the present application do not specifically limit this.

Way 4: a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information.

It should be noted that in a current 5G system, DMRS configuration type 2 includes 3 code division multiplexing groups, namely CDM groups. In an antenna port indication field of the DCI, in case that 3 or more DMRS ports are indicated, the DMRS ports are constrained to be distributed in 3 CDM groups.

It may be set that coherent joint transmission of data is performed based on the target TCI state information in case that the number of DMRS CDM groups is greater than 2.

Way 5: the second DCI signaling includes a second information field, the second information field is used to indicate a first TCI state used for performing the coherent joint transmission of data, and the first TCI state is at least one of the N target TCI states.

The second information field may be introduced in the second DCI signaling, and a value of the second information field is used to indicate which target TCI states are used for coherent joint transmission in addition to indicating whether to adopt coherent joint transmission currently. Table 4 is taken as an example, the second information field may include 2 bits, and different values correspond to different indicators.

**Table 4: Example table of values of the second information field**

| Code point | TCI state indicator |
|---|---|
| 00 | Coherent joint transmission is not adopted. |
| 01 | Coherent joint transmission is performed only using a first TCI state. |
| 10 | Coherent joint transmission is performed only using a second TCI state. |
| 11 | Coherent joint transmission is performed using two TCI states. |

In an embodiment, the second information field may also include other quantities of bits, such as 4 bits, 8 bits, etc., and various values may correspond to performing coherent joint transmission using different target TCI states. Embodiments of the present application do not specifically limit this.

Way 6: preset values of one or more designated information fields included in the second DCI signaling are used to indicate to perform the coherent joint transmission of data based on the target TCI state information.

Special values of one or more current information fields in the second DCI signaling may be used to indicate coherent joint transmission. For example, a combination of one or more values in a redundancy version (RV) field, a new data indicator (NDI) field, and a hybrid automatic repeat request (HARQ) process number field is used to indicate coherent joint transmission.

It should be noted that the second DCI signaling may be the same DCI signaling as the first DCI signaling indicating the target TCI state information, or it may be a dedicated DCI signaling sent from the network device to the terminal.

That is, in case that N is 2, the terminal may receive the first DCI signaling sent from the network device, the first DCI signaling is used to indicate the target TCI state information, and also indicates, through at least one of the above ways, the terminal to perform the coherent joint transmission of data based on the target TCI state information, and/or to perform the coherent joint transmission of data based on which target TCI states in the target TCI state information. Alternatively, the terminal may receive a second DCI signaling sent from the network device after receiving the first DCI signaling sent from the network device, and the second DCI signaling is used to indicate, through at least one of the above ways, the terminal to perform the coherent joint transmission of data based on the target TCI state information, and/or perform the coherent joint transmission of data based on which target TCI states in the target TCI state information.

In the method for coherent joint transmission provided by the embodiment of the present application, in case that the target TCI state information includes two target TCI states, through the DCI signaling, the terminal is indicated through various ways to perform the coherent joint transmission of data, which may ensure that coherent joint transmission under a condition that the target TCI state information includes two target TCI states may be achieved in various scenarios, thereby effectively improving the practicality of the system.

In an embodiment, in case that N is 2, that is, in case that the target TCI state information includes two target TCI states, before step 120, the method further includes:
determining that quasi co-location (QCL) types for two target TCI states are different.

It should be noted that the 5G system supports four QCL types, including QCL types A/B/C/D, and a downlink TCI state contains up to two QCL types.

For example, the target TCI state includes two target TCL states TCL_1 and TCL_2. TCI_1 contains QCL type A, and TCI_2 contains QCL type B. It may be determined that a QCL type for the target TCL state TCL_1 is different from a QCL type for the target TCL state TCL_2, and the terminal will perform the coherent joint transmission of data based on the target TCL state information.

For another example, TCI_1 contains QCL type A and QCL type D, and TCI_2 contains QCL type B and QCL type D. It may also be determined that a QCL type for the target TCL state TCL_1 is different from a QCL type for the target TCL state TCL_2, and the terminal will perform the coherent joint transmission of data based on the target TCL state information.

In the method for coherent joint transmission provided by the embodiment of the present application, in case that the target TCI state information includes two target TCI states, signaling resources may be effectively saved and the practicality of the system is improved by determining whether QCL types for the two target TCI states are the same.

In an embodiment, in case that N is 2, that is, in case that the target TCI state information includes two target TCI states, before step 120, the method for coherent joint transmission provided by the embodiment of the present application may further include:
receiving a higher layer signaling sent from the network device, where the higher layer signaling is used to indicate to perform the coherent joint transmission of data based on the target TCI state information.

In case that the target TCI state information includes two target TCI states, the terminal may receive a higher layer signaling sent from the network device, such as an RRC signaling, to obtain an indication of performing the coherent joint transmission of data based on the target TCI state information.

In case that the higher layer signaling is an RRC signaling, a parameter such as "CJTenable" may be introduced in the RRC signaling, and coherent joint transmission is indicated to be adopted based on the value of the parameter.

For example, in case that the value of the parameter "CJTenable" is set to "1", it indicates that joint coherent transmission is adopted, and in case that the value of the parameter "CJTenable" is set to "0", it indicates that joint coherent transmission is not adopted.

In the method for coherent joint transmission provided by the embodiment of the present application, in case that the target TCI state information includes two target TCI states, the practicality of the system may be effectively improved by indicating the terminal to performing the coherent joint transmission of data through the higher layer signaling.

In an embodiment, in case that N is greater than 2, that is, in case that the target TCI state information includes more than two target TCI states, the step 120 may be implemented by at least one of the following ways:
way A: performing the coherent joint transmission of data based on N target TCI states included in the target TCI state information, and transmitting a target channel and a reference signal based on M second TCI states at a specified position among the N target TCI states; or
way B: performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

For example, the terminal may receive the MAC-CE signaling sent from the network device, and the MAC-CE signaling may activate one or more groups of TCI state information.

Table 5 is taken as an example of a group of TCI state information activated by the MAC-CE signaling. In Table 5, a group of TCI state information activated by the MAC-CE signaling includes 4 pieces of TCI state information. Each code point corresponds to one piece of TCI state information, and each TCI state information corresponds to a maximum of 4 downlink TCI states (expressed as TCI) and a maximum of 2 uplink TCI states (expressed as UTCI). The UTCI state is used for uplink transmission.

**Table 5: Example Table 2 of TCI state information activated by the MAC-CE signaling**

| Code point | TCI state information |
|---|---|
| P1 | {TCI_1}, {TCI_5}, {TCI_4}, {TCI_11}, {UTCI_2}, {UTCI_6} |
| P2 | {TCI_4}, {TCI_11}, {UTCI_7} |
| P3 | {TCI_7}, {TCI_9}, {TCI_21} |
| P4 | {TCI_10}, {TCI_17} |

The DCI signaling selects a code point from this activated TCI state information group based on the value of the TCI indication field to indicate the TCI state information. For example, the value of the TCI indication field corresponds to code point P1, and the network device indicates to the terminal four downlink TCI states TCI_1, TCI_5, TCI_4 and TCI_11 and two uplink TCI states UTCI_2 and UTCI_6 to the terminal.

The coherent joint transmission of PDSCH may use 4 downlink TCI states, but the 5G system does not support other channels (physical downlink control channel (PDCCH)/physical uplink shared channel (PUSCH)/physical uplink control channel (PUCCH)) or reference signals (channel state information reference signal (CSI-RS)/sounding reference signal (SRS)) using more than 2 TCI states.

In order to distinguish the TCI states used by different channels, the terminal may use way A to perform the coherent joint transmission of data with the network device based on the target TCI state information.

That is, the system predefines all downlink TCI states for coherent joint transmission of PDSCH. For example, joint coherent transmission of PDSCH will be performed using TCI_1, TCI_5, TCI_4 and TCI_11. The system predefines that the first two (i.e., designated positions) downlink TCI states in the code points are used for the transmission of PDCCH and CSI-RS. That is, TCI_1 and TCI_5 will be used for transmission of PDCCH/CSI-RS. Since P1 corresponds to two uplink TCI states, PUSCH/PUCCH/SRS will be transmitted using UTCI_2 and UTCI_6.

Table 6 is further taken as an example of a group of TCI state information activated by the MAC-CE signaling. In Table 6, a group of TCI state information activated by the MAC-CE signaling includes 4 pieces of TCI state information. Each code point corresponds to one piece of TCI state information, and each TCI state information corresponds to a maximum of 4 joint uplink-downlink TCI states (expressed as TCI).

Table 6: Example Table 3 of TCI state information activated by the MAC-CE signaling

| Code point | TCI state information |
|---|---|
| P1 | {TCI_1}, {TCI_5}, {TCI_4}, {TCI_11} |
| P2 | {TCI_4}, {TCI_11} |
| P3 | {TCI_7}, {TCI_9}, {TCI_21} |
| P4 | {TCI_10}, {TCI_17} |

In case that the value in the TCI indication field corresponds to code point P1, a situation of the terminal adopting way A to perform THE coherent joint transmission of data with the network device based on the target TCI state information is as follows.

Joint coherent transmission of PDSCH will be performed using TCI_1, TCI_5, TCI_4 and TCI_11. The system predefines that the first two joint uplink-downlink TCI states in the code points are used for transmission of other channels/reference signals. That is, TCI_1 and TCI_5 will be used for transmission of PDCCH/PUSCH/PUCCH/CSI-RS/SRS.

In the method for coherent joint transmission provided by the embodiment of the present application, in case that the target TCI state information includes more than two target TCI states, the relative independence of the transmission of PDSCH, the target channel and the reference signal may be ensured by using all the target TCI states to perform the coherent joint transmission of data, and using the second TCI state at the specified position to perform the transmission of the target channel and the reference signal, thereby improving the flexibility of system data transmission.

It should be noted that the 5G system supports four QCL types, including QCL types A/B/C/D, and a downlink TCI state contains up to two QCL types. The system agrees that QCL types B/C cannot be used for transmission of other channel/reference signal other than PDSCH. Based on this, in the method for coherent joint transmission provided by the embodiment of the present application, the terminal may also use way B to perform the coherent joint transmission of data with the network device based on the target TCI state information.

For example, a network device is configured as follows:
TCI_1 contains QCL type A+QCL type D;
TCI_5 contains QCL type B;
TCI_4 contains QCL type A+QCL type D; and
TCI_11 contains QCL type B.

PDCCH/CSI-RS will be then transmitted using TCI_1 and TCI_4, and joint coherent transmission of PDSCH will be performed using TCI_1, TCI_5, TCI_4 and TCI_11.

For another example, a network device is configured as follows:
TCI_1 contains QCL type A+QCL type D;
TCI_5 contains QCL type B+QCL type D;
TCI_4 contains QCL type A+QCL type D; and
TCI_11 contains QCL type B+QCL type D.

PDCCH/PUSCH/PUCCH/CSI-RS/SRS will be then transmitted using TCI_1 and TCI_4, and joint coherent transmission of PDSCH will be performed using TCI_1, TCI_5, TCI_4 and TCI_11.

It may be concluded from the above examples that in case that way B is adopted to perform the coherent joint transmission of data with the network device based on the target TCI state information, the QCL types for the M second TCI states among the target TCI state information are different from the QCL types for the remaining (N-M) target TCI states among the N target TCI state information, and the QCL types for the (N-M) target TCI states among the target TCI state information is at least one of QCL type B or QCL type C.

In the method for coherent joint transmission provided by the embodiment of the present application, in case that the target TCI state information includes more than two target TCI states, the relative independence of the transmission of PDSCH, the target channel and the reference signal may be ensured by using all the target TCI states to perform the coherent joint transmission of data, and using the second TCI state with a specified QCL type to perform the transmission of the target channel and the reference signal, thereby improving the flexibility of system data transmission.

In an embodiment, in case that N is greater than 2, that is, in case that the target TCI state information includes more than two target TCI states, before step 120, the method for coherent joint transmission provided by the embodiment of the present application may further include:
receiving a second DCI signaling sent from the network device, where the second DCI signaling includes a third information field, the third information field is used to indicate a first TCI state used for performing the coherent joint transmission of data, and the first TCI state is at least one of the N target TCI states.

The third information field may be introduced in the second DCI signaling, and a value of the third information field is used to indicate which target TCI states among the target TCI state information are used for coherent joint transmission in addition to indicating to perform the coherent joint transmission using the target TCI state information.

For example, in case that a value in the TCI indication field corresponds to code point P1 in Table 6, the third information field may contain 4 bits, and its value may be, for example, "0111", which is used to indicate that TCI_5, TCI_4 and TCI_11 are used for performing joint coherent transmission of PDSCH, where "1" is used to indicate that the corresponding target TCI state is used for coherent joint transmission, and "0" is used to indicate that the corresponding target TCI state is not used for coherent joint transmission. The value of the third information field may also be, for example, "0110", which is used to indicate that TCI_1 and TCI_11 are used for joint coherent transmission of PDSCH, where "0" is used to indicate that the corresponding target TCI state is used for coherent joint transmission, and "1" is used to indicate that the corresponding target TCI state is not used for coherent joint transmission. Embodiments of the present application do not specifically limit the value of the third information field and whether the value correspond to an indication of the target TCI state.

In the method for coherent joint transmission provided by the embodiment of the present application, in case that the target TCI state information includes more than two target TCI states, through the DCI signaling, the terminal is indicated directly to perform the coherent joint transmission of data using which target TCI states, which may ensure that coherent joint transmission may be achieved in various scenarios, thereby effectively improving the practicality of the system.

In an embodiment, the third information field may be further used to indicate a second TCI state for transmitting a target channel and a reference signal, the second TCI state is at least one of the N target TCI states, and the target channel is a channel other than a physical downlink shared channel (PDSCH).

For example, in case that the value in the TCI indication field corresponds to code point P1 in Table 6, the third information field may include 8 bits, where the first 4 bits correspond to the target TCI state corresponding to the joint transmission, and the last 4 bits correspond to the TCI state used by other channels/reference signals. For example, the value of the third information field may be, for example, "01110011", which indicates that joint coherent transmission of PDSCH will be performed using TCI_5, TCI_4 and TCI_11, and PDCCH/CSI-RS will be transmitted using TCI_4 and TCI_11.

In the method for coherent joint transmission provided by the embodiment of the present application, in case that the target TCI state information includes more than two target TCI states, through the DCI signaling, the terminal is directly indicated to perform the coherent joint transmission of data using which target TCI states and perform transmission of target channels and reference signals using which second TCI states, which may ensure that coherent joint transmission may be achieved in various scenarios, thereby improving the flexibility of system data transmission of the system.

FIG. 2 is a second schematic flowchart of a method for coherent joint transmission according to an embodiment of the present application. As shown in FIG. 2, the embodiment of the present application provides a method for coherent joint transmission, which is performed by a network device, such as a base station. The method includes the following steps.

Step 210: sending a media access control-control element (MAC-CE) signaling or a first downlink control information (DCI) signaling to a terminal, where the MAC-CE signaling or the first DCI signaling is used to indicate target transmission configuration indicator (TCI) state information.

Step 220: performing coherent joint transmission of data based on the target TCI state information;

The target TCI state information includes N target TCI states, and the target TCI state is any one of a downlink TCI state or a joint uplink-downlink TCI state, where N is a positive integer greater than 1.

In the step 210, the network device may send the MAC-CE signaling to the terminal, and the MAC-CE signaling may activate one or more groups of TCI state information. Table 1 is taken as an example of a group of TCI state information activated by the MAC-CE signaling. In Table 1, a group of TCI state information activated by MAC-CE signaling includes 8 pieces of TCI state information. Each code point corresponds to one piece of TCI state information, and each TCI state information corresponds to 1 or 2 (or more, table 1 is only for example) target TCI states. The target TCI state may be used for both downlink transmission and uplink transmission in case that the target TCI state is a joint uplink-downlink TCI state.

**Table 1: Example Table 1 of TCI state information activated by the MAC-CE signaling**

| Code point | TCI state information |
|---|---|
| P1 | {TCI_1},{TCI_5} |
| P2 | {TCI_4},{TCI_11} |
| P3 | {TCI_7},{TCI_9} |
| P4 | {TCI_10},{TCI_17} |
| P5 | {TCI_2} |
| P6 | {TCI_3} |
| P7 | {TCI_6} |
| P8 | {TCI_8} |

It should be noted that in order to ensure coherent joint transmission between the network device and the terminal, it is also necessary to determine the target TCI state information for performing the coherent joint transmission of data from the group of TCI state information activated by the MAC-CE signaling.

The network device may still determine to take which TCI state information in the group of TCI state information as the target TCI state information by transmitting the MAC-CE signaling to the terminal. The MAC-CE signaling may be the same as the MAC-CE signaling that activates one or more groups of TCI state information, or it may be a dedicated MAC-CE signaling sent from the network device to the terminal.

In an embodiment, the network device may also determine to take which TCI state information in the group of TCI state information as the target TCI state information by transmitting the first DCI signaling to the terminal.

For example, the first DCI signaling may select a code point from the activated TCI state information group based on the value of the TCI indication field for TCI state indication. For example, a value of the TCI indication field corresponds to code point P3, and the network device indicates the target TCI state information including two target TCI states TCI_7 and TCI_9 to the terminal.

It should be noted that in case that the target TCI state information indicated by the MAC-CE signaling or the first DCI signaling includes one target TCI state, such as target TCI state information including {TCI_2}, target TCI state information including {TCI_3}, etc., the terminal will directly perform coherent joint transmission of data based on a single target TCI state among the target TCI state information.

In case that the target TCI state information indicated by the MAC-CE signaling or the first DCI signaling includes two or more target TCI states, the network device will further indicate the terminal whether to perform the coherent joint transmission of data based on the target TCI state information, and/or perform the coherent joint transmission of data specifically based on which target TCI states in the target TCI state information. The network device and the terminal may also perform coherent joint transmission of data based on the target TCI state information in a predetermined way.

In step 220, after indicating the target TCI state information to the terminal, the network device will perform the coherent joint transmission of data with the terminal based on the target TCI state information. That is, the network device will use multiple TRPs to simultaneously transmit the same data stream with the terminal based on one or more target TCI states among the target TCI state information.

In the method for coherent joint transmission provided by the present application, the target TCI state information is indicated to the terminal through the MAC-CE signaling or the DCI signaling, and the terminal and the network device perform the coherent joint transmission of data based on the target TCI state information to realize the coherent joint transmission of data in the multi-TRP scenario, thereby improving data transmission performance and the flexibility of a communication system.

In an embodiment, in case that N is 2, that is, in case that the target TCI state information includes two target TCI states, the network device needs to further indicate the terminal whether to perform the coherent joint transmission of data based on the target TCI state information, and/or perform the coherent joint transmission of data specifically based on which target TCI states in the target TCI state information. Therefore, before step 120, the method for coherent joint transmission provided by the embodiment of the present application may further include:
sending the second DCI signaling to the terminal; where the second DCI signaling is used to indicate the terminal to perform the coherent joint transmission of data in at least one of the following ways:
way 1: the second DCI signaling includes a first information field, and the first information field is used to indicate to perform the coherent joint transmission of data based on the target TCI state information.

The second DCI signaling may include one first information field, and the first information field is used to explicitly indicate to perform the coherent joint transmission based on the target TCI state information.

For example, a value of the first information field may be used to indicate whether coherent joint transmission is adopted. The first information field may use a 1-bit width, in case that the value of the first information field is "0", it indicates that coherent joint transmission is not adopted, and in case that the value of the first information field is "1", it indicates that coherent joint transmission is adopted. Alternatively, in case that the value of the first information field is "1", it indicates that coherent joint transmission is not adopted, and in case that the value of the first information field is "0", it indicates that coherent joint transmission is adopted.

Way 2: the second DCI signaling includes a resource assignment field, a number of repetition of the target TCI state information in the resource assignment field is 1, and the number of repetition of the target TCI state information is used to indicate to perform the coherent joint transmission of data based on the target TCI state information.

For example, a time domain resource assignment (TDRA) field in the second DCI signaling may be used to indicate whether to perform the coherent joint transmission of data based on the target TCI state information. The time domain resource assignment field corresponds to a resource assignment parameter list, as shown in Table 2.

**Table 2: Resource assignment parameter list 1**

| Code point | Slot offset | Start symbol and length | PDSCH mapping type | Number of repetition |
|---|---|---|---|---|
| P1 | XXX | XXX | XXX | 1 |
| P2 | XXX | XXX | XXX | 2 |
| P3 | XXX | XXX | XXX | 8 |
| P4 | XXX | XXX | XXX | 4 |

Each row in Table 2 corresponds to a set of parameter values, including a slot offset, a start symbol and a length, a PDSCH mapping type and a number of repetition, etc. The resource assignment parameter list is configured by a higher layer parameter radio resource control (RRC) or predefined by the system.

A value of the number of repetition in the resource assignment parameter list may be specifically used to indicate whether to perform the coherent joint transmission of data based on the target TCI state information.

For example, in case that the number of repetition is configured to 1, it means that the target TCI state information corresponding to this row is used for coherent joint transmission. Table 2 is taken as an example. In case that the value of the time domain resource assignment field corresponds to code point P1, coherent joint transmission is performed based on the target TCI state information. In case that the value of the time domain resource assignment field corresponds to other code points, coherent joint transmission is not adopted.

In an embodiment, joint coherent transmission may only be performed in case that the number of repetition is configured to 2, 8, 4, etc. Embodiments of the present application do not specifically limit this.

Way 3: the second DCI signaling includes a resource assignment field, the resource assignment field includes a target parameter, and a value of the target parameter is used to indicate to perform the coherent joint transmission of data based on the target TCI state information.

A target parameter may be introduced in the resource assignment parameter list corresponding to the time domain resource assignment field, as shown in Table 3, and it indicates whether performing the coherent joint transmission of data based on the target TCI state information according to the value of the target parameter.

**Table 3: Resource assignment parameter list 2**

| Code point | Slot offset | Start symbol and length | PDSCH mapping type | Number of repetition | Target parameter |
|---|---|---|---|---|---|
| P1 | XXX | XXX | XXX | 1 | 0 |
| P2 | XXX | XXX | XXX | 2 | 1 |
| P3 | XXX | XXX | XXX | 8 | 1 |
| P4 | XXX | XXX | XXX | 4 | 0 |

A value of the target parameter being 0 indicates that coherent joint transmission is not adopted, and the value of the target parameter being 1 indicates that coherent joint transmission is adopted. For example, in case that the value of the time domain resource assignment field corresponds to code point P2 or code point P3, coherent joint transmission is adopted. In case that the value of the time domain resource assignment field corresponds to code point P1 or code point P4, coherent joint transmission is not adopted.

In an embodiment, the value of the target parameter being set to 1 may indicate that coherent joint transmission is not adopted, and being set to 0 may indicate that coherent joint transmission is adopted. Embodiments of the present application do not specifically limit this.

Way 4: a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information.

It should be noted that in a current 5G system, DMRS configuration type 2 includes 3 code division multiplexing groups, namely CDM groups. In an antenna port indication field of the DCI, in case that 3 or more DMRS ports are indicated, the DMRS ports are constrained to be distributed in 3 CDM groups.

It may be set that coherent joint transmission of data is performed based on the target TCI state information in case that the number of DMRS CDM groups is greater than 2.

Way 5: the second DCI signaling includes a second information field, the second information field is used to indicate a first TCI state used for performing the coherent joint transmission of data, and the first TCI state is at least one of the N target TCI states.

The second information field may be introduced in the second DCI signaling, and a value of the second information field is used to indicate which target TCI states are used for coherent joint transmission in addition to indicating whether to adopt coherent joint transmission currently. Table 4 is taken as an example, the second information field may include 2 bits, and different values correspond to different indicators.

**Table 4: Example table of values of the second information field**

| Code point | TCI state indicator |
|---|---|
| 00 | Coherent joint transmission is not adopted. |
| 01 | Coherent joint transmission is performed only using a first TCI state. |
| 10 | Coherent joint transmission is performed only using a second TCI state. |
| 11 | Coherent joint transmission is performed using two TCI states. |

In an embodiment, the second information field may also include other quantities of bits, such as 4 bits, 8 bits, etc., and various values may correspond to performing coherent joint transmission using different target TCI states. Embodiments of the present application do not specifically limit this.

Way 6: preset values of one or more designated information fields included in the second DCI signaling are used to indicate to perform the coherent joint transmission of data based on the target TCI state information.

Special values of one or more current information fields in the second DCI signaling may be used to indicate coherent joint transmission. For example, a combination of one or more values in a redundancy version (RV) field, a new data indicator (NDI) field, and a hybrid automatic repeat request (HARQ) process number field is used to indicate coherent joint transmission.

It should be noted that the second DCI signaling may be the same DCI signaling as the first DCI signaling indicating the target TCI state information, or it may be a dedicated DCI signaling sent from the network device to the terminal.

That is, in case that N is 2, the network device may send the first DCI signaling to the terminal, the first DCI signaling is used to indicate the target TCI state information, and also indicates, through at least one of the above ways, the terminal to perform the coherent joint transmission of data based on the target TCI state information, and/or to perform the coherent joint transmission of data based on which target TCI states in the target TCI state information. Alternatively, the network device may send a second DCI signaling to the terminal after sending the first DCI signaling to the terminal, and the second DCI signaling is used to indicate, through at least one of the above ways, the terminal to perform the coherent joint transmission of data based on the target TCI state information, and/or perform the coherent joint transmission of data based on which target TCI states in the target TCI state information.

In the method for coherent joint transmission provided by the embodiment of the present application, in case that the target TCI state information includes two target TCI states, through the DCI signaling, the terminal is indicated through various ways to perform the coherent joint transmission of data, which may ensure that coherent joint transmission under a condition that the target TCI state information includes two target TCI states may be achieved in various scenarios, thereby effectively improving the practicality of the system.

In an embodiment, in case that N is 2, that is, in case that the target TCI state information includes two target TCI states, before step 120, the method further includes:
determining that quasi co-location (QCL) types for two target TCI states are different.

It should be noted that the 5G system supports four QCL types, including QCL types A/B/C/D, and a downlink TCI state contains up to two QCL types.

For example, the target TCI state includes two target TCL states TCL_1 and TCL_2. TCI_1 contains QCL type A, and TCI_2 contains QCL type B. It may be determined that a QCL type for the target TCL state TCL_1 is different from a QCL type for the target TCL state TCL_2, and the network device will perform the coherent joint transmission of data based on the target TCL state information.

For another example, TCI_1 contains QCL type A and QCL type D, and TCI_2 contains QCL type B and QCL type D. It may also be determined that a QCL type for the target TCL state TCL_1 is different from a QCL type for the target TCL state TCL_2, and the network device will perform the coherent joint transmission of data based on the target TCL state information.

In the method for coherent joint transmission provided by the embodiment of the present application, in case that the target TCI state information includes two target TCI states, signaling resources may be effectively saved and the practicality of the system is improved by determining whether QCL types for the two target TCI states are the same.

In an embodiment, in case that N is 2, that is, in case that the target TCI state information includes two target TCI states, before step 120, the method for coherent joint transmission provided by the embodiment of the present application may further include:
sending a higher layer signaling to the network device, where the higher layer signaling is used to indicate to perform the coherent joint transmission of data based on the target TCI state information.

In case that the target TCI state information includes two target TCI states, the network device may send the higher layer signaling to the terminal, such as an RRC signaling, to indicate to perform the coherent joint transmission of data based on the target TCI state information.

In case that the higher layer signaling is an RRC signaling, a parameter such as "CJTenable" may be introduced in the RRC signaling, and coherent joint transmission is indicated to be adopted based on the value of the parameter.

For example, in case that the value of the parameter "CJTenable" is set to "1", it indicates that joint coherent transmission is adopted, and in case that the value of the parameter "CJTenable" is set to "0", it indicates that joint coherent transmission is not adopted.

In the method for coherent joint transmission provided by the embodiment of the present application, in case that the target TCI state information includes two target TCI states, the practicality of the system may be effectively improved by indicating the terminal to performing the coherent joint transmission of data through the higher layer signaling.

In an embodiment, in case that N is greater than 2, that is, in case that the target TCI state information includes more than two target TCI states, the step 120 may be implemented by at least one of the following ways:
way A: performing the coherent joint transmission of data based on N target TCI states included in the target TCI state information, and transmitting a target channel and a reference signal based on M second TCI states at a specified position among the N target TCI states; or
way B: performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

For example, the network device may send the MAC-CE signaling to the terminal, and the MAC-CE signaling may activate one or more groups of TCI state information. Table 5 is taken as an example of a group of TCI state information activated by the MAC-CE signaling. In Table 5, a group of TCI state information activated by the MAC-CE signaling includes 4 pieces of TCI state information. Each code point corresponds to one piece of TCI state information, and each TCI state information corresponds to a maximum of 4 downlink TCI states (expressed as TCI) and a maximum of 2 uplink TCI states (expressed as UTCI). The UTCI state is used for uplink transmission.

**Table 5: Example Table 2 of TCI state information activated by the MAC-CE signaling**

| Code point | TCI state information |
|---|---|
| P1 | {TCI_1}, {TCI_5}, {TCI_4}, {TCI_11}, {UTCI_2}, {UTCI_6} |
| P2 | {TCI_4}, {TCI_11}, {UTCI_7} |
| P3 | {TCI_7}, {TCI_9}, {TCI_21} |
| P4 | (TCI_10}, {TCI_17} |

The DCI signaling selects a code point from this activated TCI state information group based on the value of the TCI indication field to indicate the TCI state information. For example, the value of the TCI indication field corresponds to code point P1, and the network device indicates to the terminal four downlink TCI states TCI_1, TCI_5, TCI_4 and TCI_11 and two uplink TCI states UTCI_2 and UTCI_6 to the terminal.

The coherent joint transmission of PDSCH may use 4 downlink TCI states, but the 5G system does not support other channels (physical downlink control channel (PDCCH)/physical uplink shared channel (PUSCH)/physical uplink control channel (PUCCH)) or reference signals (channel state information reference signal (CSI-RS)/sounding reference signal (SRS)) using more than 2 TCI states.

In order to distinguish the TCI states used by different channels, the network device may use way A to perform the coherent joint transmission of data with the terminal based on the target TCI state information.

That is, the system predefines all downlink TCI states for coherent joint transmission of PDSCH. For example, joint coherent transmission of PDSCH will be performed using TCI_1, TCI_5, TCI_4 and TCI_11. The system predefines that the first two (i.e., designated positions) downlink TCI states in the code points are used for the transmission of PDCCH and CSI-RS. That is, TCI_1 and TCI_5 will be used for transmission of PDCCH/CSI-RS. Since P1 corresponds to two uplink TCI states, PUSCH/PUCCH/SRS will be transmitted using UTCI_2 and UTCI_6.

Table 6 is further taken as an example of a group of TCI state information activated by the MAC-CE signaling. In Table 6, a group of TCI state information activated by the MAC-CE signaling includes 4 pieces of TCI state information. Each code point corresponds to one piece of TCI state information, and each TCI state information corresponds to a maximum of 4 joint uplink-downlink TCI states (expressed as TCI).

**Table 6: Example Table 3 of TCI state information activated by the MAC-CE signaling**

| Code point | TCI state information |
|---|---|
| P1 | {TCI_1}, {TCI_5}, {TCI_4}, {TCI_11} |
| P2 | {TCI_4}, {TCI_11} |
| P3 | {TCI_7}, (TCI_9}, {TCI_21} |
| P4 | {TCI_10}, {TCI_17} |

In case that the value in the TCI indication field corresponds to code point P1, a situation of the network device adopting way A to perform the coherent joint transmission of data with the terminal based on the target TCI state information is as follows.

Joint coherent transmission of PDSCH will be performed using TCI_1, TCI_5, TCI_4 and TCI_11. The system predefines that the first two joint uplink-downlink TCI states in the code points are used for transmission of other channels/reference signals. That is, TCI_1 and TCI_5 will be used for transmission of PDCCH/PUSCH/PUCCH/CSI-RS/SRS.

In the method for coherent joint transmission provided by the embodiment of the present application, in case that the target TCI state information includes more than two target TCI states, the relative independence of the transmission of PDSCH, the target channel and the reference signal may be ensured by using all the target TCI states to perform the coherent joint transmission of data, and using the second TCI state at the specified position to perform the transmission of the target channel and the reference signal, thereby improving the flexibility of system data transmission.

It should be noted that the 5G system supports four QCL types, including QCL types A/B/C/D, and a downlink TCI state contains up to two QCL types. The system agrees that QCL types B/C cannot be used for transmission of other channel/reference signal other than PDSCH. Based on this, in the method for coherent joint transmission provided by the embodiment of the present application, the network device may also use way B to perform the coherent joint transmission of data with the terminal based on the target TCI state information.

For example, a network device is configured as follows:
TCI_1 contains QCL type A+QCL type D;
TCI_5 contains QCL type B;
TCI_4 contains QCL type A+QCL type D; and
TCI_11 contains QCL type B.

PDCCH/CSI-RS will be then transmitted using TCI_1 and TCI_4, and joint coherent transmission of PDSCH will be performed using TCI_1, TCI_5, TCI_4 and TCI_11.

For another example, a network device is configured as follows:
TCI_1 contains QCL type A+QCL type D;
TCI_5 contains QCL type B+QCL type D;
TCI_4 contains QCL type A+QCL type D; and
TCI_11 contains QCL type B+QCL type D.

PDCCH/PUSCH/PUCCH/CSI-RS/SRS will be then transmitted using TCI_1 and TCI_4, and joint coherent transmission of PDSCH will be performed using TCI_1, TCI_5, TCI_4 and TCI_11.

It may be concluded from the above examples that in case that way B is adopted to perform the coherent joint transmission of data with the network device based on the target TCI state information, the QCL types for the M second TCI states among the target TCI state information are different from the QCL types for the remaining (N-M) target TCI states among the N target TCI state information, and the QCL types for the (N-M) target TCI states among the target TCI state information is at least one of QCL type B or QCL type C.

In the method for coherent joint transmission provided by the embodiment of the present application, in case that the target TCI state information includes more than two target TCI states, the relative independence of the transmission of PDSCH, the target channel and the reference signal may be ensured by using all the target TCI states to perform the coherent joint transmission of data, and using the second TCI state with a specified QCL type to perform the transmission of the target channel and the reference signal, thereby improving the flexibility of system data transmission.

In an embodiment, in case that N is greater than 2, that is, in case that the target TCI state information includes more than two target TCI states, before step 120, the method for coherent joint transmission provided by the embodiment of the present application may further include:
sending a second DCI signaling to the terminal, where the second DCI signaling includes a third information field, the third information field is used to indicate a first TCI state used for performing the coherent joint transmission of data, and the first TCI state is at least one of the N target TCI states.

The third information field may be introduced in the second DCI signaling, and a value of the third information field is used to indicate which target TCI states among the target TCI state information are used for coherent joint transmission in addition to indicating to perform the coherent joint transmission using the target TCI state information.

For example, in case that a value in the TCI indication field corresponds to code point P1 in Table 6, the third information field may contain 4 bits, and its value may be, for example, "0111", which is used to indicate that TCI_5, TCI_4 and TCI_11 are used for performing joint coherent transmission of PDSCH, where "1" is used to indicate that the corresponding target TCI state is used for coherent joint transmission, and "0" is used to indicate that the corresponding target TCI state is not used for coherent joint transmission. The value of the third information field may also be, for example, "0110", which is used to indicate that TCI_1 and TCI_11 are used for joint coherent transmission of PDSCH, where "0" is used to indicate that the corresponding target TCI state is used for coherent joint transmission, and "1" is used to indicate that the corresponding target TCI state is not used for coherent joint transmission. Embodiments of the present application embodiment do not specifically limit the value of the third information field and whether the value correspond to an indication of the target TCI state.

In the method for coherent joint transmission provided by the embodiment of the present application, in case that the target TCI state information includes more than two target TCI states, through the DCI signaling, the terminal is indicated directly to perform the coherent joint transmission of data using which target TCI states, which may ensure that coherent joint transmission may be achieved in various scenarios, thereby effectively improving the practicality of the system.

In an embodiment, the third information field may be further used to indicate a second TCI state for transmitting a target channel and a reference signal, the second TCI state is at least one of the N target TCI states, and the target channel is a channel other than a physical downlink shared channel (PDSCH).

For example, in case that the value in the TCI indication field corresponds to code point P1 in Table 6, the third information field may include 8 bits, where the first 4 bits correspond to the target TCI state corresponding to the joint transmission, and the last 4 bits correspond to the TCI state used by other channels/reference signals. For example, the value of the third information field may be, for example, "01110011", which indicates that joint coherent transmission of PDSCH will be performed using TCI_5, TCI_4 and TCI_11, and PDCCH/CSI-RS will be transmitted using TCI_4 and TCI_11.

In the method for coherent joint transmission provided by the embodiment of the present application, in case that the target TCI state information includes more than two target TCI states, through the DCI signaling, the terminal is directly indicated to perform the coherent joint transmission of data using which target TCI states and perform transmission of target channels and reference signals using which second TCI states, which may ensure that coherent joint transmission may be achieved in various scenarios, thereby improving the flexibility of system data transmission of the system.

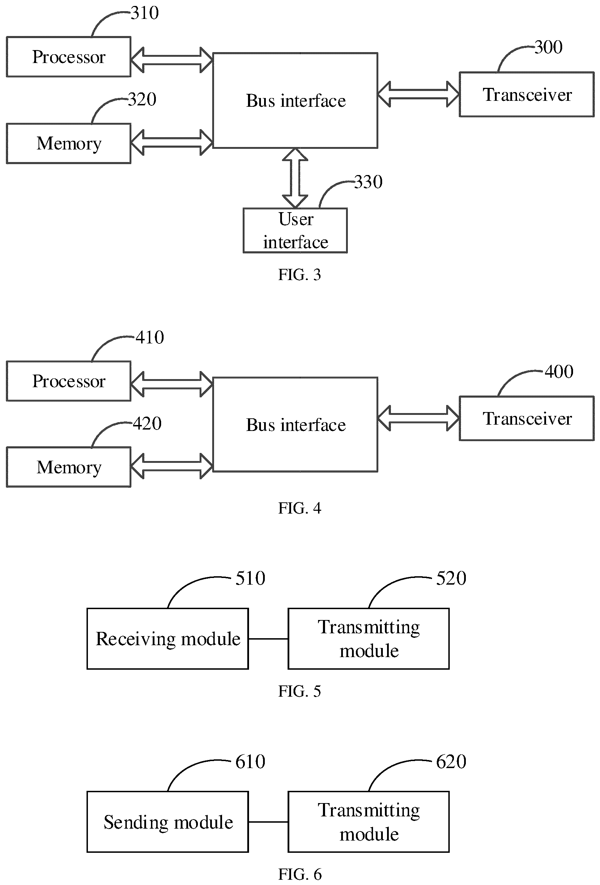

FIG. 3 is a schematic structural diagram of a terminal according to an embodiment of the present application. As shown in FIG. 3, the terminal includes a memory 320, a transceiver 300, and a processor 310,
where the memory 320 is used for storing a computer program; the transceiver 300 is used for receiving and sending data under control of the processor 310; and the processor 310 is used for reading the computer program in the memory 320 and performing the following operations:
receiving a media access control-control element (MAC-CE) signaling or a first downlink control information (DCI) signaling sent from a network device, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, which are well known in the art, and therefore will not be further described in the present application. The bus interface provides an interface. The transceiver 300 may be multiple elements, i.e., including a transmitter and a receiver, units for providing communication with various other devices over transmission media including wireless channels, wired channels, fiber optic cables, and the like. For different user equipment, the user interface 330 may also be an interface capable of externally or internally connecting the required equipment, and the connected equipment includes, but is not limited to, a keypad, a display, a speaker, a microphone, a joystick, and the like.

The processor 310 is responsible for managing the bus architecture and general processing, and the memory 320 may store data used by the processor 310 when performing operations.

Alternatively, the processor 310 may be a central processing unit (CPU), an application specific integrated circuit (ASIC), a field-programmable gate array (FPGA), or a complex programmable logic device (CPLD). The processor may also use a multi-core architecture.

The processor is used to perform any one of the methods of the embodiments of the present application based on an obtained executable instruction by calling the computer program stored in the memory. The processor and memory may also be physically separated.

In an embodiment, in case that N is 2, before performing the coherent joint transmission of data based on the target TCI state information, the processor 310 is further used for: receiving a second DCI signaling sent from the network device,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the processor 310 is further used for:
determining that quasi co-location (QCL) types for two target TCI states are different.

In an embodiment, in case that N is 2, before performing the coherent joint transmission of data based on the target TCI state information, the processor 310 is further used for:
receiving a higher layer signaling sent from the network device, where the higher layer signaling is used to indicate to perform the coherent joint transmission of data based on the target TCI state information.

In an embodiment, in case that N is greater than 2, performing the coherent joint transmission of data based on the target TCI state information includes at least one of the following:
performing the coherent joint transmission of data based on N target TCI states included in the target TCI state information, and a target channel and a reference signal based on M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the processor 310 is further used for:
receiving a second DCI signaling sent from the network device, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

It should be noted here that the above-mentioned terminal according to the embodiments of the present application may implement all the method steps implemented by the above-mentioned method embodiments performed by a terminal, and may achieve the same effect. The same parts and beneficial effects as the same method embodiments is not repeated in the present application.

FIG. 4 is a schematic structural diagram of a network device according to an embodiment of the present application. As shown in FIG. 4, the network device includes a memory 420, a transceiver 400, and a processor 410,
where the memory 420 is used for storing a computer program; the transceiver 400 is used for receiving and sending data under control of the processor 410; and the processor 410 is used for reading the computer program in the memory 420 and performing the following operations:
sending a media access control-control element (MAC-CE) signaling or a first downlink control information (DCI) signaling to a terminal, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

The transceiver 400 is used for receiving and sending data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may be multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), and the processor may also use a multi-core architecture.

In an embodiment, in case that N is 2, before performing the coherent joint transmission of data based on the target TCI state information, the processor 410 is further used for: sending a second DCI signaling to the terminal,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the processor 410 is further used for:
determining that quasi co-location (QCL) types for two target TCI states are different.

In an embodiment, in case that N is 2, before performing the coherent joint transmission of data based on the target TCI state information, the processor 410 is further used for:
indicating the terminal to perform the coherent joint transmission of data based on the target TCI state information through a higher layer signaling.

In an embodiment, in case that N is greater than 2, performing the coherent joint transmission of data based on the target TCI state information includes at least one of the following:
performing the coherent joint transmission of data based on N target TCI states included in the target TCI state information, and transmitting a target channel and a reference signal using M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the processor 410 is further used for:
sending a second DCI signaling to the terminal, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

It should be noted here that the above-mentioned network device according to the embodiments of the present application may implement all the method steps implemented by the above-mentioned method embodiments performed by a network device, and may achieve the same effect. The same parts and beneficial effects as the same method embodiments is not repeated in the present application.

FIG. 5 is a first schematic flowchart of an apparatus for coherent joint transmission according to an embodiment of the present application. As shown in FIG. 5, an embodiment of the present application further provides an apparatus for coherent joint transmission, for use in a terminal. The apparatus includes:
a receiving module 510, used for receiving a media access control-control element (MAC-CE) signaling or a first downlink control information (DCI) signaling sent from a network device, where the MAC-CE signaling or the first DCI signaling is used to indicate target transmission configuration indicator (TCI) state information; and
a transmitting module 520, used for performing the coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the receiving module 510 is further used for: receiving a second DCI signaling sent from the network device,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the transmitting module 520 is further used for:
determining that quasi co-location (QCL) types for two target TCI states are different.

In an embodiment, in case that N is 2, before performing the coherent joint transmission of data based on the target TCI state information, the receiving module 510 is further used for:
receiving a higher layer signaling sent from the network device, where the higher layer signaling is used to indicate to perform the coherent joint transmission of data based on the target TCI state information.

In an embodiment, in case that N is greater than 2, the transmitting module 520 is used for performing at least one of the following:
performing the coherent joint transmission of data based on N target TCI states included in the target TCI state information, and a target channel and a reference signal based on M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the receiving module 510 is further used for:
receiving a second DCI signaling sent from the network device, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL types the for remaining (N-M) target TCI states includes at least one of QCL type B or QCL type C.

It should be noted here that the above-mentioned apparatus according to the embodiments of the present application may implement all the method steps implemented by the above-mentioned method embodiments performed by a terminal, and may achieve the same effect. The same parts and beneficial effects as the same method embodiments is not repeated in the present application.

FIG. 6 is a second schematic flowchart of an apparatus for coherent joint transmission according to an embodiment of the present application. As shown in FIG. 6, an embodiment of the present application further provides an apparatus for coherent joint transmission, for use in a network device. The apparatus includes:
a sending module 610, used for sending a media access control-control element (MAC-CE) signaling or a first downlink control information (DCI) signaling to a terminal, where the MAC-CE signaling or the first DCI signaling is used to indicate target transmission configuration indicator (TCI) state information; and
a transmitting module 620, used for performing the coherent joint transmission of data based on the target TCI state information;
where the target TCI state information includes N target TCI states, and the target TCI state is any one of a downlink TCI state or a joint uplink-downlink TCI state, where N is a positive integer greater than 1.

In an embodiment, in case that N is 2, before performing the coherent joint transmission of data based on the target TCI state information, the sending module 610 is further used for: sending a second DCI signaling to the terminal,
where the second DCI signaling is used to indicate the terminal to perform the coherent joint transmission of data in at least one of the following ways:
the second DCI signaling includes a first information field, and the first information field is used to indicate to perform the coherent joint transmission of data based on the target TCI state information;
the second DCI signaling includes a resource assignment field, a number of repetition of the target TCI state information in the resource assignment field is 1, and the number of repetition of the target TCI state information is used to indicate to perform the coherent joint transmission of data based on the target TCI state information;
the second DCI signaling includes a resource assignment field, the resource assignment field includes a target parameter, and a value of the target parameter is used to indicate to perform the coherent joint transmission of data based on the target TCI state information;
a number of demodulation reference signal (DMRS) code division multiplexing (CDM) groups indicated by the second DCI signaling is greater than 2, and the number of DMRS CDM groups is used to indicate to perform the coherent joint transmission of data based on the target TCI state information;
the second DCI signaling includes a second information field, the second information field is used to indicate a first TCI state used for performing the coherent joint transmission of data, and the first TCI state is at least one of the N target TCI states; or
preset values of one or more designated information fields included in the second DCI signaling are used to indicate to perform the coherent joint transmission of data based on the target TCI state information.

In an embodiment, in case that N is 2, before performing the coherent joint transmission of data based on the target TCI state information, the transmitting module 620 is further used for:
determining that quasi co-location (QCL) types for two target TCI states are different.

In an embodiment, in case that N is 2, before performing the coherent joint transmission of data based on the target TCI state information, the sending module 610 is further used for:
indicating the terminal to perform the coherent joint transmission of data based on the target TCI state information through a higher layer signaling.

In an embodiment, in case that N is greater than 2, the transmitting module 620 is used for performing at least one of the following:
performing the coherent joint transmission of data based on N target TCI states included in the target TCI state information, and transmitting a target channel and a reference signal using M second TCI states at a specified position among the N target TCI states; or
performing the coherent joint transmission of data based on N target TCI states included in the target TCI state information, determining M second TCI states based on a quasi co-location (QCL) type for each target TCI state among the N target TCI states, and transmitting a target channel and a reference signal based on the second TCI state;
where M is a positive integer less than N, and the target channel is a channel other than a physical downlink shared channel (PDSCH).

In an embodiment, in case that N is greater than 2, before performing the coherent joint transmission of data based on the target TCI state information, the sending module 610 is further used for:
sending a second DCI signaling to the terminal, where the second DCI signaling includes a third information field, the third information field is used to indicate a first TCI state used for performing the coherent joint transmission of data, and the first TCI state is at least one of the N target TCI states.

In an embodiment, the third information field is further used to indicate a second TCI state for transmitting a target channel and a reference signal, the second TCI state is at least one of the N target TCI states, and the target channel is a channel other than a physical downlink shared channel (PDSCH).

In an embodiment, a QCL type for the M second TCI states is different from a QCL type for remaining (N-M) target TCI states among the N target TCI states.

In an embodiment, the QCL type for the remaining (N-M) target TCI states includes at least one of QCL type B or QCL type C.

It should be noted here that the above-mentioned apparatus according to the embodiments of the present application may implement all the method steps implemented by the above-mentioned method embodiments performed by the network device, and may achieve the same effect. The same parts and beneficial effects as the same method embodiments is not repeated in the present application.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, a server, or a network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

An embodiment of the present application further provides a processor-readable storage medium, where the processor-readable storage medium stores a computer program and the computer program causes the processor to perform the methods provided by above embodiments, which, for example, include:
receiving a media access control-control element (MAC-CE) signaling or a first downlink control information (DCI) signaling sent from a network device, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1; or,
sending a media access control-control element (MAC-CE) signaling or a first downlink control information (DCI) signaling to a terminal, where the MAC-CE signaling or the first DCI signaling is used to indicate target transmission configuration indicator (TCI) state information; and
performing coherent joint transmission of data based on the target TCI state information;
where the target TCI state information includes N target TCI states, and the target TCI state is any one of a downlink TCI state or a joint uplink-downlink TCI state, where N is a positive integer greater than 1.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CN) via a radio access network (RAN), and the wireless terminal device may be a mobile terminal device, such as a mobile phone (or referred to as "cellular "phone) and computers with mobile terminal device, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an Internet protocol (IP) communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for coherent joint transmission, performed by a terminal, comprising:
receiving a media access control-control element, MAC-CE, signaling or a first downlink control information, DCI, signaling sent from a network device, wherein the MAC-CE signaling or the first DCI signaling is used to indicate target transmission configuration indicator, TCI, state information; and
performing coherent joint transmission of data based on the target TCI state information;
wherein the target TCI state information comprises N target TCI states, and the target TCI state is any one of a downlink TCI state or a joint uplink-downlink TCI state, wherein N is a positive integer greater than 1.

2. The method of claim 1, wherein in case that N is 2, before performing the coherent joint transmission of data based on the target TCI state information, the method further comprises: receiving a second DCI signaling sent from the network device,
wherein the second DCI signaling is used to indicate the terminal to perform the coherent joint transmission of data in at least one of the following ways:
the second DCI signaling comprises a first information field, and the first information field is used to indicate to perform the coherent joint transmission of data based on the target TCI state information;
the second DCI signaling comprises a resource assignment field, a number of repetition of the target TCI state information in the resource assignment field is 1, and the number of repetition of the target TCI state information is used to indicate to perform the coherent joint transmission of data based on the target TCI state information;
the second DCI signaling comprises a resource assignment field, the resource assignment field comprises a target parameter, and a value of the target parameter is used to indicate to perform the coherent joint transmission of data based on the target TCI state information;
a number of demodulation reference signal, DMRS, code division multiplexing, CDM, groups indicated by the second DCI signaling is greater than 2, and the number of DMRS CDM groups is used to indicate to perform the coherent joint transmission of data based on the target TCI state information;
the second DCI signaling comprises a second information field, the second information field is used to indicate a first TCI state used for performing the coherent joint transmission of data, and the first TCI state is at least one of the N target TCI states; or
preset values of one or more designated information fields comprised in the second DCI signaling are used to indicate to perform the coherent joint transmission of data based on the target TCI state information.

3. The method of claim 1, wherein in case that N is 2, before performing the coherent joint transmission of data based on the target TCI state information, the method further comprises:
determining that quasi co-location, QCL, types for two target TCI states are different.

4. The method of claim 1, wherein in case that N is 2, before performing the coherent joint transmission of data based on the target TCI state information, the method further comprises:
receiving a higher layer signaling sent from the network device, wherein the higher layer signaling is used to indicate to perform the coherent joint transmission of data based on the target TCI state information.

5. The method of claim 1, wherein in case that N is greater than 2, performing the coherent joint transmission of data based on the target TCI state information comprises at least one of the following:
performing the coherent joint transmission of data based on N target TCI states comprised in the target TCI state information, and transmitting a target channel and a reference signal based on M second TCI states at a specified position among the N target TCI states; or
performing the coherent joint transmission of data based on N target TCI states comprised in the target TCI state information, determining M second TCI states based on a quasi co-location, QCL, type for each target TCI state among the N target TCI states, and transmitting a target channel and a reference signal based on the second TCI state;
wherein M is a positive integer less than N, and the target channel is a channel other than a physical downlink shared channel, PDSCH.

6. The method of claim 1, wherein in case that N is greater than 2, before performing the coherent joint transmission of data based on the target TCI state information, the method further comprises:
receiving a second DCI signaling sent from the network device, wherein the second DCI signaling comprises a third information field, the third information field is used to indicate a first TCI state used for performing the coherent joint transmission of data, and the first TCI state is at least one of the N target TCI states.

7. The method of claim 6, wherein the third information field is further used to indicate a second TCI state for transmitting a target channel and a reference signal, the second TCI state is at least one of the N target TCI states, and the target channel is a channel other than a physical downlink shared channel, PDSCH.

8. The method of claim 5, wherein a QCL type for the M second TCI states is different from a QCL type for remaining (N-M) target TCI states among the N target TCI states.

9. The method of claim 8, wherein the QCL type for the remaining (N-M) target TCI states comprises at least one of a QCL type B or a QCL type C.

10. A method for coherent joint transmission, performed by a network device, comprising:
sending a media access control-control element, MAC-CE, signaling or a first downlink control information, DCI, signaling to a terminal, wherein the MAC-CE signaling or the first DCI signaling is used to indicate target transmission configuration indicator, TCI, state information; and
performing coherent joint transmission of data based on the target TCI state information;
wherein the target TCI state information comprises N target TCI states, and the target TCI state is any one of a downlink TCI state or a joint uplink-downlink TCI state, wherein N is a positive integer greater than 1.

11. The method of claim 10, wherein in case that N is 2, before performing the coherent joint transmission of data based on the target TCI state information, the method further comprises: sending a second DCI signaling to the terminal,
wherein the second DCI signaling is used to indicate the terminal to perform the coherent joint transmission of data in at least one of the following ways:
the second DCI signaling comprises a first information field, and the first information field is used to indicate to perform the coherent joint transmission of data based on the target TCI state information;
the second DCI signaling comprises a resource assignment field, a number of repetition of the target TCI state information in the resource assignment field is 1, and the number of repetition of the target TCI state information is used to indicate to perform the coherent joint transmission of data based on the target TCI state information;
the second DCI signaling comprises a resource assignment field, the resource assignment field comprises a target parameter, and a value of the target parameter is used to indicate to perform the coherent joint transmission of data based on the target TCI state information;
a number of demodulation reference signal, DMRS, code division multiplexing, CDM, groups indicated by the second DCI signaling is greater than 2, and the number of DMRS CDM groups is used to indicate to perform the coherent joint transmission of data based on the target TCI state information;
the second DCI signaling comprises a second information field, the second information field is used to indicate a first TCI state used for performing the coherent joint transmission of data, and the first TCI state is at least one of the N target TCI states; or
preset values of one or more designated information fields comprised in the second DCI signaling are used to indicate to perform the coherent joint transmission of data based on the target TCI state information.

12. The method of claim 10, wherein in case that N is 2, before performing the coherent joint transmission of data based on the target TCI state information, the method further comprises:
determining that quasi co-location, QCL, types for two target TCI states are different.

13. The method of claim 10, wherein in case that N is 2, before performing the coherent joint transmission of data based on the target TCI state information, the method further comprises:
indicating the terminal to perform the coherent joint transmission of data based on the target TCI state information through a higher layer signaling.

14. The method of claim 10, wherein in case that N is greater than 2, performing the coherent joint transmission of data based on the target TCI state information comprises at least one of the following:
performing the coherent joint transmission of data based on N target TCI states comprised in the target TCI state information, and transmitting a target channel and a reference signal using M second TCI states at a specified position among the N target TCI states; or
performing the coherent joint transmission of data based on N target TCI states comprised in the target TCI state information, determining M second TCI states based on a quasi co-location, QCL, type for each target TCI state among the N target TCI states, and transmitting a target channel and a reference signal based on the second TCI state;
wherein M is a positive integer less than N, and the target channel is a channel other than a physical downlink shared channel, PDSCH.

15. The method of claim 10, wherein in case that N is greater than 2, before performing the coherent joint transmission of data based on the target TCI state information, the method further comprises:
sending a second DCI signaling to the terminal, wherein the second DCI signaling comprises a third information field, the third information field is used to indicate a first TCI state used for performing the coherent joint transmission of data, and the first TCI state is at least one of the N target TCI states.

16. The method of claim 15, wherein the third information field is further used to indicate a second TCI state for transmitting a target channel and a reference signal, the second TCI state is at least one of the N target TCI states, and the target channel is a channel other than a physical downlink shared channel, PDSCH.

17. The method of claim 14, wherein a QCL type for the M second TCI states is different from a QCL type for remaining (N-M) target TCI states among the N target TCI states.

18. The method of claim 17, wherein the QCL type for the remaining (N-M) target TCI states comprises at least one of a QCL type B or a QCL type C.

19. A terminal, comprising a memory, a transceiver and a processor,
wherein the memory is used for storing a computer program; the transceiver is used for receiving and sending data under control of the processor; and the processor is used for reading the computer program in the memory and performing the following operations:
receiving a media access control-control element, MAC-CE, signaling or a first downlink control information, DCI, signaling sent from a network device, wherein the MAC-CE signaling or the first DCI signaling is used to indicate target transmission configuration indicator, TCI, state information; and
performing coherent joint transmission of data based on the target TCI state information;
wherein the target TCI state information comprises N target TCI states, and the target TCI state is any one of a downlink TCI state or a joint uplink-downlink TCI state, wherein N is a positive integer greater than 1.

20. The terminal of claim 19, wherein in case that N is 2, before performing the coherent joint transmission of data based on the target TCI state information, the processor is further used for: receiving a second DCI signaling sent from the network device,
wherein the second DCI signaling is used to indicate the terminal to perform the coherent joint transmission of data in at least one of the following ways:
the second DCI signaling comprises a first information field, and the first information field is used to indicate to perform the coherent joint transmission of data based on the target TCI state information;
the second DCI signaling comprises a resource assignment field, a number of repetition of the target TCI state information in the resource assignment field is 1, and the number of repetition of the target TCI state information is used to indicate to perform the coherent joint transmission of data based on the target TCI state information;
the second DCI signaling comprises a resource assignment field, the resource assignment field comprises a target parameter, and a value of the target parameter is used to indicate to perform the coherent joint transmission of data based on the target TCI state information;
a number of demodulation reference signal, DMRS, code division multiplexing, CDM, groups indicated by the second DCI signaling is greater than 2, and the number of DMRS CDM groups is used to indicate to perform the coherent joint transmission of data based on the target TCI state information;
the second DCI signaling comprises a second information field, the second information field is used to indicate a first TCI state used for performing the coherent joint transmission of data, and the first TCI state is at least one of the N target TCI states; or
preset values of one or more designated information fields comprised in the second DCI signaling are used to indicate to perform the coherent joint transmission of data based on the target TCI state information.

21. The terminal of claim 19, wherein in case that N is 2, before performing the coherent joint transmission of data based on the target TCI state information, the processor is further used for:
determining that quasi co-location, QCL, types for two target TCI states are different.

22. The terminal of claim 19, wherein in case that N is 2, before performing the coherent joint transmission of data based on the target TCI state information, the processor is further used for:
receiving a higher layer signaling sent from the network device, wherein the higher layer signaling is used to indicate to perform the coherent joint transmission of data based on the target TCI state information.

23. The terminal of claim 19, wherein in case that N is greater than 2, performing the coherent joint transmission of data based on the target TCI state information comprises at least one of the following:
performing the coherent joint transmission of data based on N target TCI states comprised in the target TCI state information, and transmitting a target channel and a reference signal based on M second TCI states at a specified position among the N target TCI states; or
performing the coherent joint transmission of data based on N target TCI states comprised in the target TCI state information, determining M second TCI states based on a quasi co-location, QCL, type for each target TCI state among the N target TCI states, and transmitting a target channel and a reference signal based on the second TCI state;
wherein M is a positive integer less than N, and the target channel is a channel other than a physical downlink shared channel, PDSCH.

24. The terminal of claim 19, wherein in case that N is greater than 2, before performing the coherent joint transmission of data based on the target TCI state information, the processor is further used for:
receiving a second DCI signaling sent from the network device, wherein the second DCI signaling comprises a third information field, the third information field is used to indicate a first TCI state used for performing the coherent joint transmission of data, and the first TCI state is at least one of the N target TCI states.

25. The terminal of claim 24, wherein the third information field is further used to indicate a second TCI state for transmitting a target channel and a reference signal, the second TCI state is at least one of the N target TCI states, and the target channel is a channel other than a physical downlink shared channel, PDSCH.

26. The terminal of claim 23, wherein a QCL type for the M second TCI states is different from a QCL type for remaining (N-M) target TCI states among the N target TCI states.

27. The terminal of claim 26, wherein the QCL type for the remaining (N-M) target TCI states comprises at least one of a QCL type B or a QCL type C.

28. A network device, comprising a memory, a transceiver and a processor,
wherein the memory is used for storing a computer program; the transceiver is used for receiving and sending data under control of the processor; and the processor is used for reading the computer program in the memory and performing the following operations:
sending a media access control-control element, MAC-CE, signaling or a first downlink control information, DCI, signaling to a terminal, wherein the MAC-CE signaling or the first DCI signaling is used to indicate target transmission configuration indicator, TCI, state information; and
performing coherent joint transmission of data based on the target TCI state information;
wherein the target TCI state information comprises N target TCI states, and the target TCI state is any one of a downlink TCI state or a joint uplink-downlink TCI state, wherein N is a positive integer greater than 1.

29. The network device of claim 28, wherein in case that N is 2, before performing the coherent joint transmission of data based on the target TCI state information, the processor is further used for: sending a second DCI signaling to the terminal,
wherein the second DCI signaling is used to indicate the terminal to perform the coherent joint transmission of data in at least one of the following ways:
the second DCI signaling comprises a first information field, and the first information field is used to indicate to perform the coherent joint transmission of data based on the target TCI state information;
the second DCI signaling comprises a resource assignment field, a number of repetition of the target TCI state information in the resource assignment field is 1, and the number of repetition of the target TCI state information is used to indicate to perform the coherent joint transmission of data based on the target TCI state information;
the second DCI signaling comprises a resource assignment field, the resource assignment field comprises a target parameter, and a value of the target parameter is used to indicate to perform the coherent joint transmission of data based on the target TCI state information;
a number of demodulation reference signal, DMRS, code division multiplexing, CDM, groups indicated by the second DCI signaling is greater than 2, and the number of DMRS CDM groups is used to indicate to perform the coherent joint transmission of data based on the target TCI state information;
the second DCI signaling comprises a second information field, the second information field is used to indicate a first TCI state used for performing the coherent joint transmission of data, and the first TCI state is at least one of the N target TCI states; or
preset values of one or more designated information fields comprised in the second DCI signaling are used to indicate to perform the coherent joint transmission of data based on the target TCI state information.

30. The network device of claim 28, wherein in case that N is 2, before performing the coherent joint transmission of data based on the target TCI state information, the processor is further used for:
determining that quasi co-location, QCL, types for two target TCI states are different.

31. The network device of claim 28, wherein in case that N is 2, before performing the coherent joint transmission of data based on the target TCI state information, the processor is further used for:
indicating the terminal to perform the coherent joint transmission of data based on the target TCI state information through a higher layer signaling.

32. The network device of claim 28, wherein in case that N is greater than 2, performing the coherent joint transmission of data based on the target TCI state information comprises at least one of the following:
performing the coherent joint transmission of data based on N target TCI states comprised in the target TCI state information, and transmitting a target channel and a reference signal using M second TCI states at a specified position among the N target TCI states; or
performing the coherent joint transmission of data based on N target TCI states comprised in the target TCI state information, determining M second TCI states based on a quasi co-location, QCL, type for each target TCI state among the N target TCI states, and transmitting a target channel and a reference signal based on the second TCI state;
wherein M is a positive integer less than N, and the target channel is a channel other than a physical downlink shared channel, PDSCH.

33. The network device of claim 28, wherein in case that N is greater than 2, before performing the coherent joint transmission of data based on the target TCI state information, the processor is further used for:
sending a second DCI signaling to the terminal, wherein the second DCI signaling comprises a third information field, the third information field is used to indicate a first TCI state used for performing the coherent joint transmission of data, and the first TCI state is at least one of the N target TCI states.

34. The network device of claim 33, wherein the third information field is further used to indicate a second TCI state for transmitting a target channel and a reference signal, the second TCI state is at least one of the N target TCI states, and the target channel is a channel other than a physical downlink shared channel, PDSCH.

35. The network device of claim 32, wherein a QCL type for the M second TCI states is different from a QCL type for remaining (N-M) target TCI states among the N target TCI states.

36. The network device of claim 35, wherein the QCL type for the remaining (N-M) target TCI states comprises at least one of a QCL type B or a QCL type C.

37. An apparatus for coherent joint transmission, comprising:
a receiving module, used for receiving a media access control-control element, MAC-CE, signaling or a first downlink control information, DCI, signaling sent from a network device, wherein the MAC-CE signaling or the first DCI signaling is used to indicate target transmission configuration indicator, TCI, state information; and
a transmitting module, used for performing coherent joint transmission of data based on the target TCI state information;
wherein the target TCI state information comprises N target TCI states, and the target TCI state is any one of a downlink TCI state or a joint uplink-downlink TCI state, wherein N is a positive integer greater than 1.

38. The apparatus of claim 37, wherein in case that N is 2, before performing the coherent joint transmission of data based on the target TCI state information, the receiving module is further used for: receiving a second DCI signaling sent from the network device,
wherein the second DCI signaling is used to indicate a terminal to perform the coherent joint transmission of data in at least one of the following ways:
the second DCI signaling comprises a first information field, and the first information field is used to indicate to perform the coherent joint transmission of data based on the target TCI state information;
the second DCI signaling comprises a resource assignment field, a number of repetition of the target TCI state information in the resource assignment field is 1, and the number of repetition of the target TCI state information is used to indicate to perform the coherent joint transmission of data based on the target TCI state information;
the second DCI signaling comprises a resource assignment field, the resource assignment field comprises a target parameter, and a value of the target parameter is used to indicate to perform the coherent joint transmission of data based on the target TCI state information;
a number of demodulation reference signal, DMRS, code division multiplexing, CDM, groups indicated by the second DCI signaling is greater than 2, and the number of DMRS CDM groups is used to indicate to perform the coherent joint transmission of data based on the target TCI state information;
the second DCI signaling comprises a second information field, the second information field is used to indicate a first TCI state used for performing the coherent joint transmission of data, and the first TCI state is at least one of the N target TCI states; or
preset values of one or more designated information fields comprised in the second DCI signaling are used to indicate to perform the coherent joint transmission of data based on the target TCI state information.

39. The apparatus of claim 37, wherein in case that N is 2, before performing the coherent joint transmission of data based on the target TCI state information, the transmitting module is further used for:
determining that quasi co-location, QCL, types for two target TCI states are different.

40. The apparatus of claim 37, wherein in case that N is 2, before performing the coherent joint transmission of data based on the target TCI state information, the receiving module is further used for:
receiving a higher layer signaling sent from the network device, wherein the higher layer signaling is used to indicate to perform the coherent joint transmission of data based on the target TCI state information.

41. The apparatus of claim 37, wherein in case that N is greater than 2, the transmitting module is used for performing at least one of the following:
performing the coherent joint transmission of data based on N target TCI states comprised in the target TCI state information, and transmitting a target channel and a reference signal based on M second TCI states at a specified position among the N target TCI states; or
performing the coherent joint transmission of data based on N target TCI states comprised in the target TCI state information, determining M second TCI states based on a quasi co-location, QCL, type for each target TCI state among the N target TCI states, and transmitting a target channel and a reference signal based on the second TCI state;
wherein M is a positive integer less than N, and the target channel is a channel other than a physical downlink shared channel, PDSCH.

42. The apparatus of claim 37, wherein in case that N is greater than 2, before performing the coherent joint transmission of data based on the target TCI state information, the receiving module is further used for:
receiving a second DCI signaling sent from the network device, wherein the second DCI signaling comprises a third information field, the third information field is used to indicate a first TCI state used for performing the coherent joint transmission of data, and the first TCI state is at least one of the N target TCI states.

43. The apparatus of claim 42, wherein the third information field is further used to indicate a second TCI state for transmitting a target channel and a reference signal, the second TCI state is at least one of the N target TCI states, and the target channel is a channel other than a physical downlink shared channel, PDSCH.

44. The apparatus of claim 41, wherein a QCL type for the M second TCI states is different from a QCL type for remaining (N-M) target TCI states among the N target TCI states.

45. The apparatus of claim 44, wherein the QCL type for the remaining (N-M) target TCI states comprises at least one of a QCL type B or a QCL type C.

46. An apparatus for coherent joint transmission, comprising:
a sending module, used for sending a media access control-control element, MAC-CE, signaling or a first downlink control information, DCI, signaling to a terminal, wherein the MAC-CE signaling or the first DCI signaling is used to indicate target transmission configuration indicator, TCI, state information; and
a transmitting module, used for performing coherent joint transmission of data based on the target TCI state information;
wherein the target TCI state information comprises N target TCI states, and the target TCI state is any one of a downlink TCI state or a joint uplink-downlink TCI state, wherein N is a positive integer greater than 1.

47. The apparatus of claim 46, wherein in case that N is 2, before performing the coherent joint transmission of data based on the target TCI state information, the sending module is further used for: sending a second DCI signaling to the terminal,
wherein the second DCI signaling is used to indicate the terminal to perform the coherent joint transmission of data in at least one of the following ways:
the second DCI signaling comprises a first information field, and the first information field is used to indicate to perform the coherent joint transmission of data based on the target TCI state information;
the second DCI signaling comprises a resource assignment field, a number of repetition of the target TCI state information in the resource assignment field is 1, and the number of repetition of the target TCI state information is used to indicate to perform the coherent joint transmission of data based on the target TCI state information;
the second DCI signaling comprises a resource assignment field, the resource assignment field comprises a target parameter, and a value of the target parameter is used to indicate to perform the coherent joint transmission of data based on the target TCI state information;
a number of demodulation reference signal, DMRS, code division multiplexing, CDM, groups indicated by the second DCI signaling is greater than 2, and the number of DMRS CDM groups is used to indicate to perform the coherent joint transmission of data based on the target TCI state information;
the second DCI signaling comprises a second information field, the second information field is used to indicate a first TCI state used for performing the coherent joint transmission of data, and the first TCI state is at least one of the N target TCI states; or
preset values of one or more designated information fields comprised in the second DCI signaling are used to indicate to perform the coherent joint transmission of data based on the target TCI state information.

48. The apparatus of claim 46, wherein in case that N is 2, before performing the coherent joint transmission of data based on the target TCI state information, the transmitting module is further used for:
determining that quasi co-location, QCL, types for two target TCI states are different.

49. The apparatus of claim 46, wherein in case that N is 2, before performing the coherent joint transmission of data based on the target TCI state information, the sending module is further used for:
indicating the terminal to perform the coherent joint transmission of data based on the target TCI state information through a higher layer signaling.

50. The apparatus of claim 46, wherein in case that N is greater than 2, the transmitting module is used for performing at least one of the following:
performing the coherent joint transmission of data based on N target TCI states comprised in the target TCI state information, and transmitting a target channel and a reference signal using M second TCI states at a specified position among the N target TCI states; or
performing the coherent joint transmission of data based on N target TCI states comprised in the target TCI state information, determining M second TCI states based on a quasi co-location, QCL, type for each target TCI state among the N target TCI states, and transmitting a target channel and a reference signal based on the second TCI state;
wherein M is a positive integer less than N, and the target channel is a channel other than a physical downlink shared channel, PDSCH.

51. The apparatus of claim 46, wherein in case that N is greater than 2, before performing the coherent joint transmission of data based on the target TCI state information, the sending module is further used for:
sending a second DCI signaling to the terminal, wherein the second DCI signaling comprises a third information field, the third information field is used to indicate a first TCI state used for performing the coherent joint transmission of data, and the first TCI state is at least one of the N target TCI states.

52. The apparatus of claim 51, wherein the third information field is further used to indicate a second TCI state for transmitting a target channel and a reference signal, the second TCI state is at least one of the N target TCI states, and the target channel is a channel other than a physical downlink shared channel, PDSCH.

53. The apparatus of claim 50, wherein a QCL type for the M second TCI states is different from a QCL type for remaining (N-M) target TCI states among the N target TCI states.

54. The apparatus of claim 53, wherein the QCL type for the remaining (N-M) target TCI states comprises at least one of a QCL type B or a QCL type C.

55. A processor-readable storage medium, wherein the processor-readable storage medium stores a computer program, and the computer program is used to cause a processor to perform the method of any one of claims 1 to 9 or perform the method of any one of claims 10 to 18.
